# EUROPÄISCHE PATENTSCHRIFT

(11) **EP 4 598 763 B1**
(45) Veröffentlichungstag und Bekanntmachung des Hinweises auf die Patenterteilung: **08.04.2026**
(21) Anmeldenummer: 23786227.1
(22) Anmeldetag: 06.10.2023
(51) Int. Cl.: B60K 17/346, F16H 48/22, B60K 17/35

(54) **ALLRADGETRIEBENES FAHRZEUG**
ALL-WHEEL DRIVE VEHICLE
VÉHICULE À TRACTION INTÉGRALE

(30) Priorität: 12.10.2022 DE 102022126427
(43) Veröffentlichungstag der Anmeldung: 13.08.2025
(73) Patentinhaber: AUDI AG, 85057 Ingolstadt (DE)
(72) Erfinder: REHR, Alfred, 85120 Hepberg (DE); SANGL, Alfred, 93349 Mindelstetten-Hiendorf (DE)
(74) Vertreter: Bierschneider, Walter
(86) Internationale Anmeldenummer: PCT/EP2023/077681
(87) Internationale Veröffentlichungsnummer: WO 2024/078981

(56) Entgegenhaltungen:
- EP-A1- 3 059 133
- WO-A1-2019/197336
- CH-A2- 715 236
- CN-A- 111 204 233
- DE-A1- 102011 100 815
- DE-A1- 102014 212 856
- DE-A1- 102015 214 035
- DE-A1- 102020 000 598
- JP-A- H08 156 635
- US-A1- 2019 283 578
- US-A1- 2021 347 257

## Beschreibung

Die Erfindung betrifft ein allradgetriebenes, zweispuriges Fahrzeug nach dem Oberbegriff des Anspruchs 1.

Bei einem allradgetriebenen Fahrzeug kann der Allradantrieb mit insgesamt vier Elektromaschinen realisiert sein, von denen jede Elektromaschine als Radnabenmotor jeweils einem Fahrzeugrad zugeordnet ist. In diesem Fall kommt das Fahrzeug ohne Differentiale aus. Alternativ dazu kann ein Allradantrieb mit einer der Vorderachse zugeordneter Elektromaschine und einer der Hinterachse zugeordneten Elektromaschine realisiert werden, die jeweils über ein Vorderachsdifferential und über ein Hinterachsdifferential auf die Fahrzeugräder abtreiben. Des Weiteren gibt es Konzepte mit einer Elektromaschine und einem Sperrdifferential auf der Vorderachse und zwei Elektromaschinen auf der Hinterachse, die jeweils ein Hinterrad antreiben. Aus Off-road-Fahrzeugen sind zudem Antriebe mit einer Brennkraftmaschine und einer Drehmomentverteilung mittels dreier Sperrdifferentiale bekannt.

Ein gattungsgemäßes allradgetriebenes Fahrzeug weist einen zuschaltbaren Allradantrieb auf, bei dem der Antriebsstrang über eine Elektromaschine verfügt. Im Frontantrieb treibt die Elektromaschine nur auf die Vorderachse des Fahrzeugs ab. Die Elektromaschine ist über ein Mittendifferential sowie über eine Mittenkupplung mit einer Kardanwelle koppelbar, die über ein Hinterachsdifferential sowie über Gelenkwellen mit Hinterrädern des Fahrzeugs trieblich verbindbar ist. Bei geöffneter Mittenkupplung ist die Hinterachse vom Antriebsstrang entkoppelt, während bei geschlossener Mittenkupplung die Hinterachse dem Antriebsstrang zuschaltbar ist.

Bei einem elektrisch betriebenen Geländefahrzeug mit zwei oder mehreren Elektromaschinen besteht folgende Problematik: Mehrere Elektromaschinen können zwar drehmoment- und drehzahlmäßig unabhängig gut gesteuert werden, ohne dass die Vorder- und Hinterachse eine mechanische Verbindung benötigen. Das bedeutet aber, dass jede Elektromaschine die Anforderungen an Drehmoment und Leistung für das angeschlossene Rad/die angeschlossenen Räder erbringen muss. Da im Offroad-Betrieb oft ein Rad oder eine Achse kein Drehmoment absetzen kann, muss der jeweils andere Antrieb die volle Antriebsleistung erbringen. Das führt zu hohen Anforderungen je Elektromaschine. Die Summenleistung aller Elektromaschinen übersteigt in diesem Fall häufig die Anforderung des Gesamtfahrzeugs. Des Weiteren besteht im Offroad-Betrieb die Gefahr, dass einzelne Elektromaschinen überlastet und damit Drehmoment und Leistung geringer werden. Jede Elektromaschine muss zudem über eine eigene Steuerung (Pluswechselrichter) verfügen. Daher sind mehrmotorige Antriebe sehr teuer und gewichtsintensiv. Aus der US,5,373,912 A ist ein Fahrzeug-Antriebsstrang mit verbrennungsmotorischem Antrieb bekannt, der ein Mittendifferential zur Leistungsverteilung auf Vorder- und Hinterachsdifferentiale antreibt. Aus der DE 103 04 806 A1 ist ein allradgetriebenes Fahrzeug mit einem Verbrennungsmotor bekannt, der über ein Getriebe ein Mittendifferential antreibt. Aus der EP 248 582 B1 ist ein allradgetriebenes Fahrzeug mit einem Zentral-Differential bekannt, das über Kardanwellen Vorder- und Hinterachsdifferenti-ale zum Antrieb der Fahrzeugräder antreibt. Aus der WO2019197336A1 ist ein allradgetriebenes Fahrzeug bekannt, dessen Antriebsstrang genau eine Elektromaschine aufweist.

Die Aufgabe der Erfindung besteht darin, ein allradgetriebenes, zweispuriges Fahrzeug bereitzustellen, dessen Funktionalität im Vergleich zum Stand der Technik gesteigert ist und das insbesondere effizient im Frontantrieb fahren kann und/oder während der Fahrt unter Last in den Allradantrieb wechseln kann.

Die Aufgabe ist durch die Merkmale des Anspruches 1 gelöst. Bevorzugte Weiterbildungen der Erfindung sind in den Unteransprüchen offenbart.

Die Erfindung geht von einem allradgetriebenen Fahrzeug mit zuschaltbarem Allradantrieb aus. Erfindungsgemäß weist der Antriebsstrang des Fahrzeug genau eine Elektromaschine auf, die im Frontantrieb nur auf die Fahrzeug-Vorderachse abtreibt. Die Elektromaschine ist über ein Mittendifferential bzw. Zwischenachsdifferential und über eine Mittenkupplung mit einer Kardanwelle koppelbar. Die Kardanwelle ist über ein Hinterachsdifferential sowie über Gelenkwellen mit Hinterrädern des Fahrzeugs trieblich verbindbar. Bei geöffneter Mittenkupplung ist die Hinterachse vom Antriebsstrang entkoppelt. Bei geschlossener Mittenkupplung ist die Hinterachse dem Antriebsstrang zuschaltbar. Erfindungsgemäß ist in einer der Gelenkwellen der Hinterachse eine Hinterachs-Trennkupplung verbaut. Im Frontantrieb, das heißt bei geöffneter Mittenkupplung, ist die Hinterachs-Trennkupplung geöffnet. Auf diese Weise ist ein Teilstrang zwischen der Mittenkupplung und dem Hinterachsdifferential stillgelegt, das heißt insbesondere die Kardanwelle und die Differentialkorb des Hinterachsdifferentials. Die Ausgleichsräder des Hinterachsdifferentials drehen sich dagegen lastfrei.

Die Erfindung beschreibt in einer bevorzugten Ausführungsform einen Ein-Motoren-Antrieb mit insgesamt drei Differentialen und fünf Kupplungen. Mit dieser Anordnung kann das Fahrzeug effizient im Frontbetrieb fahren, wobei die Kardanwelle und das hintere Winkelgetriebe vollständig entkoppelt sind. Der Wechsel auf Allradbetrieb kann während der Fahrt unter Last vollautomatisch erfolgen (und zurück). Des Weiteren kann durch gezielten Einsatz der Differentialsperren das Antriebsmoment an den Rädern geregelt werden (Offroad-Betrieb). Bei einem Fahrzeug mit mehreren Elektromaschinen muss dagegen jede Elektromaschine die Anforderungen (Drehmoment und Leistung) des angetriebenen Rades/der angetrieben Räder abdecken. Die Summenleistung ergibt sich durch Addition aller installierten Elektromaschinen. Damit würden sich Systemleistungen ergeben, die viel zu hoch sind.

In dem erfindungsgemäßen Konzept ist genau eine Elektromaschine vorgesehen, die auf die Anforderungen vom Gesamtfahrzeug ausgelegt ist. Die Leistungsanforderung im Offroad-Betrieb ist in der Regel niedriger. Das Antriebskonzept ist in der Lage die erforderliche Antriebsleistung dauerhaft an einzelnen Rädern zu verteilen. Die Gefahr der Überhitzung des E-Motors besteht nicht.

Im Frontantrieb ist die Mitten-Sperrkupplung geschlossen, alle anderen Kupplungen sind offen. Das (in den Figuren) rechte Hinterrad treibt die Ausgleichsräder des Hinterachsdifferentials an; da aber keine Verbindung zum linken Hinterrad besteht, findet keine Kraftübertragung zwischen dem hinteren Winkelgetriebe und den Hinterrädern statt. Das Differentialgehäuse (d.h. der Differentialkorb), das hintere Winkelgetriebe, die Kardanwelle und die hintere Kupplungshälfte der Mittelkupplung drehen sich daher nicht.

Erfindungsgemäß ist der Antriebsstrang so ausgelegt, dass ein Wechsel vom Frontantrieb zum Allradantrieb während des Fahrbetriebs zugkraftunterbrechungsfrei durchführbar ist. Bei einem Wechsel von Frontantrieb zu Allradantrieb wird die Hinterachs-Sperrkupplung geschlossen. Dadurch wird das hintere Winkelgetriebe, die Kardanwelle und die hintere Kupplungshälfte der Mittenkupplung auf eine mit der Fahrgeschwindigkeit korrelierende Drehzahl beschleunigt. Jetzt wird die Hinterachs-Trennkupplung, danach öffnet die Hinterachs-Sperrkupplung und unmittelbar danach schließt die Mittenkupplung (dies ist nur eine Möglichkeit, der Schaltablauf kann beliebig geändert werden). Erfindungsgemäß ist die Hinterachs-Sperrkupplung als Lamellenkupplung ausgeführt, weil sie die Synchronisation leisten muss. Die Mittenkupplung sowie die Hinterachs-Trennkupplung Kupplungen sind Klauenkupplungen, da sie lastlos und bei minimaler Differenzdrehzahl geschaltet werden. Jetzt ist eine kraftschlüssige Verbindung zur Hinterachse hergestellt.

Damit in weiterer Folge Drehzahlunterschiede zwischen Vorder- und Hinterachse ausgeglichen werden können, öffnet die Mitten-Sperrkupplung. Dieser Vorgang muss unter Umständen unter Last erfolgen. Deswegen ist die Mitten-Sperrkupplung bevorzugt als Lamellenkupplung ausgeführt. Eine Klauenkupplung würde auch möglich sein, führt aber zu Komforteinschränkungen. Im Onroad-Allradbetrieb ist es sinnfällig, die bevorzugt als Lamellenkupplungen ausgebildete Mitten-Sperrkupplung und Hinterachs-Sperrkupplung schlupfgeregelt zu schließen. Die Mittenkupplung sowie die Hinterachs-Trennkupplung bleiben dagegen dauerhaft geschlossen, während die Vorderachs-Sperrkupplung dauerhaft geöffnet bleibt.

Der Wechsel vom Allradantrieb auf den Frontbetrieb erfolgt, wenn das Antriebsmoment gering ist. Die Vorderachs-Sperrkupplung und die Hinterachs-Sperrkupplung sind geöffnet, während die Mitten-Sperrkupplung geschlossen ist; unmittelbar danach öffnen die Mittenkupplung und die Hinterachs-Trennkupplung.

Der Offroad-Allradbetrieb startet aus dem Onroad-Allradbetrieb. Im Gelände ist ein Frontbetrieb nicht vorgesehen. Um das Antriebsmoment variabel an das gewünschte Rad zu stellen, werden die Vorderachs-Sperrkupplung, die Mitten-Sperrkupplung und die Hinterachs-Sperrkupplung ganz oder teilweise geschlossen. Hier kommt gelegen, dass die Mitten-Sperrkupplung und die Hinterachs-Sperrkupplung aus oben angeführten Gründen bevorzugt als Lamellenkupplungen ausgeführt sind, wodurch ein geregelter Offroad-Betrieb ermöglicht ist.

Die Vorderachs-Sperrkupplung ist aus den folgenden Gründen bevorzugt als eine Klauenkupplung ausgeführt: Zum einen wird die Vorderachs-Sperrkupplung nur in extremen Fahrsituationen geschlossen. In diesen Situationen spielt Komfort nur eine untergeordnete Rolle. Viele Offroad-Fahrzeuge verzichten ganz auf diese Kupplung. Zum anderen weist die Vorderachs-Sperrkupplung - im Gegensatz zur Mitten-Sperrkupplung und zur Hinterachs-Sperrkupplung - keine Doppelfunktion auf.

Nachfolgend sind nochmals die wesentlichen Merkmale im Einzelnen hervorgehoben: So kann in einer technischen Umsetzung das Hinterachsdifferential über eine Hinterachs-Sperrkupplung gesperrt werden. Die Hinterachs-Sperrkupplung ist bevorzugt als eine lastschaltbare Lamellenkupplung realisiert. Bei aktivierter Sperrkupplung ist ein Differentialkorb des Hinterachsdifferentials mit einer der Gelenkwellen gekoppelt, und zwar unter Bildung einer Hinterachsdifferentialsperre.

Wie oben erwähnt, ist im Frontantrieb die Mittenkupplung geöffnet. Erfindungsgemäß wird für einen Wechsel vom Frontantrieb zu einem Allradantrieb mit zugeschalteter Hinterachse die Mittenkupplung geschlossen. Die Mittenkupplung kann bevorzugt eine nicht lastschaltbare Klauenkupplung sein. Vor diesem Hintergrund müssen die beiden Kupplungshälften der Mittenkupplung in etwa im Gleichlauf betrieben werden, um eine lastfreie Schaltung zur ermöglichen. Hierzu wirkt die Hinterachs-Sperrkupplung in Doppelfunktion als eine Synchronisierkupplung, mittels der vor dem Schließen der Mittenkupplung ein Synchronisiervorgang erfolgt. Im Synchronisiervorgang wird die (im Frontbetrieb stehende) Kardanwelle bis auf die Fahrzeuggeschwindigkeit beschleunigt. Auf diese Weise ist die mit der Kardanwelle verbundene Kupplungshälfte der Mittenkupplung auf die Drehzahl der mit dem Mittendifferential verbundenen Kupplungshälfte synchronisierbar.

Nach durchgeführtem Synchronisiervorgang wird im weiteren Prozessverlauf in beliebiger Schaltabfolge die Mittenkupplung geschlossen und die Hinterachs-Trennkupplung geschlossen. Bei geschlossener Mittenkupplung und geschlossener Hinterachs-Trennkupplung wird die Hinterachs-Sperrkupplung geöffnet und/oder die Mitten-Sperrkupplung geöffnet.

In einer konkreten Ausführungsform kann das Mittendifferential an seinen beiden Ausgangsseiten je eine nach fahrzeughinten zur Mittenkupplung führende Zwischenwelle und eine nach fahrzeugvorne zu einem Vorderachsdifferential führende Ritzelwelle aufweisen. Die zu dem Vorderachsdifferential führende Ritzelwelle kann über das Vorderachsdifferential sowie über Gelenkwellen mit Vorderrädern der Vorderachse in trieblicher Verbindung sein. Zudem kann das Mittendifferential über eine Mitten-Sperrkupplung gesperrt werden. Die Mitten-Sperrkupplung kann bevorzugt als eine lastschaltbare Lamellenkupplung realisiert sein. Bei aktivierter Sperrfunktion kann ein Differentialkorb des Mittendifferentials mit der zu dem Vorderachsdifferential führenden Antriebswelle gekoppelt sein, und zwar unter Bildung einer Mitten-Differentialsperre im Allradbetrieb.

Die Mitten-Sperrkupplung kann in Doppelfunktion nicht nur als Differentialsperre wirken. Zusätzlich kann die Mitten-Sperrkupplung im geschlossenen Zustand, das heißt im Frontantrieb, eine Antriebsmoment-Übertragung vom Mittendifferential zum Vorderachsdifferential gewährleisten.

Bevorzugt ist die Elektromaschine unmittelbar oder mittelbar mit dem Mittendifferential in trieblicher Verbindung. In diesem Fall treibt die Elektromaschine zum Beispiel unter Zwischenschaltung eines Schaltgetriebes und/oder einer Vorgelegestufe auf ein, auf dem Differentialkorb des Mittendifferentials ausgebildetes Zahnrad ab.

Das Vorderachsdifferential kann ferner über eine Vorderachs-Sperrkupplung gesperrt werden. Die Vorderachs-Sperrkupplung kann im Gegensatz zur Mitten-Sperrkupplung und zur Hinterachs-Sperrkupplung als eine nicht lastschaltbare Klauenkupplung realisiert werden. Bei aktivierter Sperrfunktion kann ein Differentialkorb des Vorderachsdifferentials mit einer Gelenkwelle gekoppelt sein, und zwar unter Bildung einer Vorderachs-Differentialsperre.

Mit dem erfindungsgemäßen Antriebsstrang kann das Fahrzeug effizient im Frontantrieb fahren, während die Kardanwelle und gegebenenfalls ein zwischen Kardanwelle und Hinterachsdifferential geschaltetes Winkelgetriebe vollständig vom Antriebsstrang entkoppelt sind. Der Wechsel vom Frontantrieb zum Allradantrieb kann während der Fahrt sowie unter Last vollautomatisch erfolgen. Gleiches gilt auch für den Wechsel vom Allradantrieb zum Frontantrieb. Des Weiteren kann durch gezieltem Einsatz der drei Differentialsperren des Antriebsmoment an den Rädern geregelt werden. Insgesamt betrifft daher die Erfindung ein Elektromaschinen-Antrieb mit drei Differentialen, nämlich dem Vorderachsdifferential, dem Hinterachsdifferential sowie dem Mittendifferential, sowie insgesamt fünf Kupplungen, nämlich der Hinterachs-Trennkupplung, der Hinterachs-Sperrkupplung, der Mittenkupplung, der Mitten-Sperrkupplung sowie der Vorderachs-Sperrkupplung.

Der Frontantrieb kann in einem energiesparenden Effizienzmodus des Fahrzeugs aktiviert sein. Demgegenüber ist der Allradantrieb unterteilbar in einen Onroad-Betrieb sowie in einem Offroad-Betrieb, das heißt einer Geländefahrt oder einer Straßenfahrt.

Im Onroad-Betrieb ist die als Lamellenkupplung ausgebildete Hinterachs-Sperrkupplung und/oder die als Lamellenkupplung ausgebildete Mitten-Sperrkupplung zur Fahrdynamik-Einstellung schlupfgeregelt öffen- und schließbar. Demgegenüber sind im Onroad-Betrieb die Mittenkupplung und die Hinterachs-Trennkupplung dauerhaft geschlossen, während die Vorderachs-Sperrkupplung geöffnet ist.

Der Offroad-Betrieb ist identisch wie der Onroad-Betrieb durchführbar mit Ausnahme, dass die Vorderachs-Sperrkupplung geschlossen ist. Die Vorderachs-Sperrkupplung (bevorzugt eine nicht lastschaltbare Klauenkupplung) kann dabei vor Beginn der Geländefahrt (das heißt im belastungsfreien Zustand) vom Fahrer eingelegt werden.

Nachfolgend sind Ausführungsbeispiele der Erfindung anhand der beigefügten Figuren beschrieben.

Es zeigen:
- Fig. 1: in einer schematischen Darstellung den Antriebsstrang eines zweispurigen Kraftfahrzeugs mit längs eingebauter Elektromaschine;
- Fig. 2: in einer Ansicht entsprechend der Figur 1 einen Antriebsstrang mit quer eingebauter Elektromaschine.

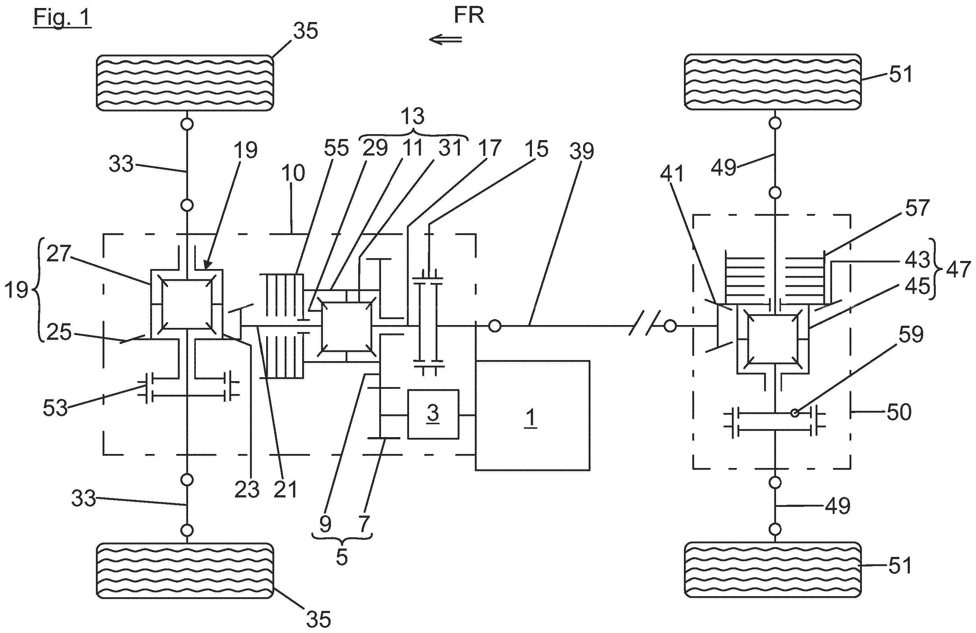

In Figur 1 ist ein Antriebsstrang in einem zweispurigen Fahrzeug gezeigt. Demnach weist der Antriebsstrang als Antriebsaggregat eine in Fahrzeuglängsrichtung verbaute Elektromaschine 1 auf. Der Elektromaschine 1 ist beispielhaft ein Schaltgetriebe 3 sowie eine Stirnradstufe 5 zur Drehmomentwandlung nachgeschaltet. Die Stirnradstufe 5 besteht aus einem auf der Getriebeausgangswelle des Schaltgetriebes 16 ausgebildeten Zahnrad 7 sowie einem eingangsseitigen Zahnrad 9 eines Differentialkorbs 11 eines Mittendifferentials 13. Das Mittendifferential 13 weist an seinen beiden Ausgangsseiten je eine nach fahrzeughinten zu einer Mittenkupplung 15 führende Zwischenwelle 17 sowie eine nach fahrzeugvorne zu einem Vorderachsdifferential 19 führenden Ritzelwelle 21 auf. Gemäß der Figur 1 ist die nach fahrzeugvorne führenden Ritzelwelle 21 über einen Winkeltrieb 23 in trieblicher Verbindung mit einem Tellerrad 25 eines Differentialkorbs des Vorderachsdifferentials 19.

Die beiden Wellen 17, 21 sind im Differentialkorb 13 des Mittendifferentials 13 mit ihren Achskegelrädern 29 in Zahneingriff mit Ausgleichsrädern 31, die drehbar am Differentialkorb 11 gelagert sind.

Das Vorderachsdifferential 19 ist in der Figur 1 in etwa baugleich ausgebildet wie das Mittendifferential 13. Demnach sind von den Ausgangsseiten des Vorderachsdifferentials 19 in Fahrzeugquerrichtung beidseitig Gelenkwellen 33 zu den Vorderrädern 35 geführt.

Die nach fahrzeughinten geführte Zwischenwelle 17 ist in der Figur 1 über die als Klauenkupplung realisierte Mittenkupplung 15 mit einer Kardanwelle 39 verbindbar, die über einen Winkeltrieb 41 auf ein eingangsseitiges Tellerrad 43 eines Differentialkorbs 45 eines Hinterachsdifferentials 47 abtreibt, deren Aufbau im Wesentlichen identisch ist wie der Aufbau des Mittendifferentials 13. Die beiden Ausgangsseiten des Hinterachsdifferentials 47 sind über Gelenkwellen 49 mit den Hinterrädern 51 verbunden.

Neben der bereits erwähnten Mittenkupplung 15 weist der Antriebsstrang vier weitere Kupplungen auf, die nachfolgend beschrieben sind. So ist das Vorderachsdifferential 19 über eine Vorderachs-Sperrkupplung 53 sperrbar. Die Vorderachs-Sperrkupplung 53 ist als nicht lastschaltbare Klauenkupplung realisiert. Bei aktivierter Sperrfunktion ist der Differentialkorb 27 des Vorderachsdifferentials 19 mit der linken Gelenkwelle 33 gekoppelt, und zwar unter Bildung einer Vorderachs-Differentialsperre. In gleicher Weise ist auch das Mittendifferential 13 über eine Mitten-Sperrkupplung 55 sperrbar. Die Mitten-Sperrkupplung 55 ist als eine lastschaltbare Lamellenkupplung realisiert. Bei aktivierter Sperrfunktion koppelt die Mitten-Sperrkupplung 55 den Differentialkorb 11 des Mittendifferentials 13 mit der nach fahrzeugvorne führenden Ritzelwelle 21. In gleicher Weise ist auch das Hinterachsdifferential 47 über eine Hinterachs-Sperrkupplung 57 sperrbar. Die Hinterachs-Sperrkupplung 57 ist ebenfalls als eine nicht lastschaltbare Klauenkupplung realisiert. Bei aktivierter Sperrfunktion koppelt die Hinterachs-Sperrkupplung 57 den Differentialkorb 27 des Vorderachsdifferential 19 mit der rechten Gelenkwelle 49, und zwar unter Bildung einer Hinterachsdifferentialsperre. Zudem ist in der linken Gelenkwelle 49 eine Hinterachs-Trennkupplung 59 verbaut.

Das Vorderachsdifferenzial 19, der Winkeltrieb 23, die Vorderachs-Sperrkupplung 53, die Mitten-Sperrkupplung 55, das Mittendifferenzial 13, die Mittelkupplung 15, die Stirnradstufe 5 sowie das Schaltgetriebe 3 sind in der Figur 1 kompakt in einem gemeinsamen Getriebegehäuse zu einer Vorderachs-Getriebeeinheit 10 zusammengefasst. Die Aktuierung der Kupplungen 53, 55, 15 sowie eventuell des Schaltgetriebes 3 kann zentral durch ein nicht gezeigtes Schaltsystem durchgeführt werden. In gleicher Weise sind an der Hinterachse das Hinterachsdifferential 47, die Hinterachs-Trennkupplung 49, die Hinterachs-Sperrkupplung 57 sowie der Winkeltrieb 41 zu einer Hinterachs-Getriebeeinheit 50 zusammengefasst.

Das Fahrzeug kann in den folgenden Betriebsmodi betrieben werden: So ist der Frontantrieb in einem energiesparenden Effizienzmodus des Fahrzeugs aktiviert. Im Frontantrieb des Fahrzeugs ist lediglich die Mitten-Sperrkupplung 55 geschlossen, während sämtliche anderen Kupplungen geöffnet sind. Auf diese Weise wird das in der Elektromaschine 1 erzeugte Antriebsmoment über das Schaltgetriebe 16, die Stirnradstufe 5, den Differentialkorb 11 des Mittendifferentials 13 auf die zum Vorderachsdifferential 19 führenden Ritzelwelle 21 geleitet. Aufgrund der geöffneten Mittenkupplung 15 sowie der geöffneten Hinterachs-Trennkupplung 59 ist im Frontantrieb ein Teilstrang zwischen der Mittenkupplung 15 und dem Hinterachsdifferential 47 stillgelegt, das heißt insbesondere die Kardanwelle 39, der Winkeltrieb 41 und der Differentialkorb 45 des Hinterachsdifferentials 47, während die Ausgleichsräder im Hinterachsdifferential 47 lastfrei drehen.

Die Mitten-Sperrkupplung 55 wirkt daher im Frontantrieb in Doppelfunktion einerseits zur Drehmomentübertragung, und anderseits während des Allradantriebs als Differentialsperre.

Ein Wechsel vom Frontantrieb zu einem Allradantrieb mit zugeschalteter Hinterachse wird wie folgt durchgeführt: So wird zunächst die Hinterachs-Sperrkupplung 57 geschlossen. Auf dieser Weise erfolgt ein Synchronisiervorgang, in dem die Kardanwelle 39 auf eine mit der Fahrzeuggeschwindigkeit korrelierende Drehzahl beschleunigt wird. Dadurch wird die mit der Kardanwelle 39 verbundene Kupplungshälfte der Mittenkupplung 15 auf die Drehzahl der mit der Antriebswelle 17 verbundenen Kupplungshälfte synchronisiert. Nach erfolgtem Synchronisiervorgang wird im weiteren Prozessverlauf in beliebiger Schaltabfolge die Mittenkupplung 15 geschlossen und die Hinterachs-Trennkupplung 59 geschlossen. Bei geschlossener Mittenkupplung 15 und geschlossener Hinterachs-Trennkupplung 59 wird die Hinterachs-Sperrkupplung 57 geöffnet. Damit in weiterer Folge Drehzahlunterschiede zwischen Vorder- und Hinterachse ausgeglichen werden können, wird auch die Mitten-Sperrkupplung 55 geöffnet, da dieser Vorgang unter Umständen unter Last erfolgt, ist die Mitten-Sperrkupplung 55 als Lamellenkupplung realisiert. Eine Realisierung der Mitten-Sperrkupplung 55 als Klauenkupplung würde dagegen zu Komforteinbußen führen.

Der Allradantrieb ist einen Onroad-Betrieb und in einen Offroad-Betrieb unterteilbar. Im Onroad-Betrieb können die Hinterachs-Sperrkupplung 57 und die Mitten-Sperrkupplung 55 für eine Fahrdynamik-Einstellung schlupfgeregelt öffen- und schließbar sein, während die Mittenkupplung 15 und die Hinterachs-Trennkupplung 59 dauerhaft geschlossen sind sowie die Vorderachs-Sperrkupplung 53 dauerhaft geöffnet ist.

Der Offroad-Betrieb ist identisch wie der Onroad-Betrieb gestaltet, mit Ausnahme, dass vor dem Start des Offroad-Betriebs die Vorderachs-Sperrkupplung 53 lastfrei geschlossen wird. Die Vorderachs-Sperrkupplung 53 ist im geschlossenen Zustand lediglich in extremen Fahrsituationen im Offroad-Betrieb erforderlich.

Mit den drei Sperrkupplungen 53, 55, 57 kann daher eine Offroad-Funktionalität bereitgestellt werden, bei der sämtliche Differentiale 13, 19 und 47 überbrückt werden können.

Im Onroad-Betrieb werden die Differentialsperren dagegen nicht benötigt. In diesem Fall ist es aus fahrdynamischer Sicht von Vorteil, wenn die Mitten-Sperrkupplung 55 sowie die Hinterachsen-Sperrkupplung 57 schlupfgeregelt geöffnet und/oder geschlossen werden, wodurch eine Drehmomentübertragung in geringem Maße regelbar ist.

Der Wechsel vom Allradantrieb in den Frontantrieb wird wie folgt gestaltet: So wird zunächst die Mitten-Sperrkupplung 55 geschlossen, um eine Drehmomentübertragung von der Elektromaschine 1 unter Überbrückung des Mittendifferentials 13 zur Vorderachse zu erzielen. Anschließend werden die Mittenkupplung 15 sowie die Hinterachs-Trennkupplung 59 geöffnet, um den Teilstrang zwischen der Mittenkupplung 15 und dem Hinterachsdifferential 47 stillzulegen.

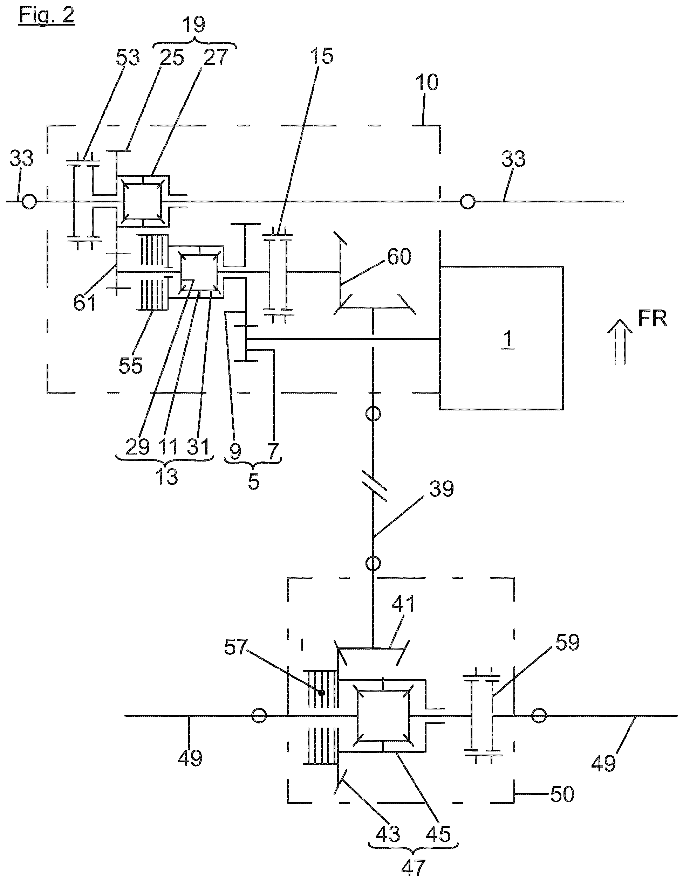

In Figur 2 ist in einem weiteren Ausführungsbeispiel ein Antriebsstrang in einem zweispurigen Fahrzeug gezeigt. Der Aufbau sowie die Funktionalität des Antriebsstrangs im Wesentlichen baugleich mit dem Aufbau und der Funktionalität des in der Figur 1 gezeigten Antriebsstrangs. Im Unterschied zur Figur 1 ist in der Figur 2 die Elektromaschine 1 und die Vorderachs-Getriebeeinheit 10 nicht längsverbaut, sondern in Fahrzeugquerrichtung verbaut. Zwischen der Mittenkupplung 15 und der Kardanwelle 39 ist ein weiterer Winkeltrieb 61 geschaltet. Zudem treibt die zur Vorderachse führende Antriebswelle 21 - im Unterschied zur Figur 1 - nicht über einen Winkeltrieb, sondern über eine Stirnradstufe 61 auf das Vorderachsdifferential 19 ab.

### BEZUGSZEICHENLISTE:

- 1: Elektromaschine
- 3: Schaltgetriebe
- 5: Stirnradstufe
- 7, 9: Zahnräder
- 10: Getriebegehäuse
- 11: Differentialkorb
- 13: Mittendifferential
- 15: Mittenkupplung
- 17: Zwischenwelle
- 19: Vorderachsdifferential
- 21: Ritzelwelle
- 23: Winkeltrieb
- 25: Tellerrad-Vorderachsdifferential
- 27: Differentialkorb-Vorderachse
- 29: Achskegelräder
- 31: Ausgleichsräder
- 33: Vorderachs-Gelenkwellen
- 35: Vorderräder
- 39: Kardanwelle
- 41: Winkeltrieb
- 43: Tellerrad -Hinterachsdifferential
- 45: Differentialkorb
- 47: Hinterachsdifferential
- 49: Hinterachs-Gelenkwellen
- 50: Hinterachs-Getriebeeinheit
- 51: Hinterräder
- 53: Vorderachs-Sperrkupplung
- 55: Mitten-Sperrkupplung
- 57: Hinterachs-Sperrkupplung
- 59: Hinterachs-Trennkupplung
- 60: Winkeltrieb
- 61: Stirnradstufe
- FR: Fahrtrichtung

## Patentansprüche

1. Allradgetriebenes Fahrzeug, dessen Antriebsstrang genau eine Elektromaschine (1) aufweist, die in einem Frontantrieb nur auf die Vorderachse des Fahrzeugs abtreibt, wobei die Elektromaschine (1) über ein Mittendifferential (13) und eine Mittenkupplung (15) mit einer Kardanwelle (39) koppelbar ist, die über ein Hinterachsdifferential (47) sowie über Gelenkwellen (49) mit Hinterrädern (51) des Fahrzeugs trieblich verbindbar ist, und wobei bei geöffneter Mittenkupplung (15) die Hinterachse vom Antriebsstrang entkoppelt ist und bei geschlossener Mittenkupplung (15) die Hinterachse dem Antriebsstrang zugeschaltet ist, wobei in einer der Gelenkwellen (49) der Hinterachse eine Hinterachs-Trennkupplung (59) verbaut ist, wobei im Frontantrieb, das heißt bei geöffneter Mittenkupplung (15), die Hinterachs-Trennkupplung (59) geöffnet ist, wodurch ein Teilstrang zwischen der Mittenkupplung (15) und dem Hinterachsdifferential (47) stillgelegt ist, wobei ein Wechsel vom Frontantrieb zum Allradantrieb während des Fahrbetriebs zugkraftunterbrechungsfrei durchführbar ist, und wobei für den Wechsel vom Frontantrieb zum Allradantrieb die Mittenkupplung (15) schließbar ist, **dadurch gekennzeichnet, dass** das Hinterachsdifferential (47) über eine Hinterachs-Sperrkupplung (57) als eine lastschaltbare Lamellenkupplung sperrbar ist, und dass die Hinterachs-Sperrkupplung (57) in Doppelfunktion als eine Synchronisierkupplung wirkt, mittels der vor dem Schließen der Mittenkupplung (15) ein Synchronisiervorgang erfolgt, in dem die Kardanwelle (39) auf eine mit der Fahrzeuggeschwindigkeit korrelierende Drehzahl beschleunigt wird, so dass die mit der Kardanwelle (39) verbundene Kupplungshälfte der Mittenkupplung (15) auf die Drehzahl der mit dem Mittendifferential (13) verbundenen Kupplungshälfte der Mittenkupplung (15) synchronisierbar ist.

2. Fahrzeug nach Anspruch 1, **dadurch gekennzeichnet, dass** bei aktivierter Sperrfunktion ein Differentialkorb (45) des Hinterachsdifferentials (47) mit einer der Hinterachs-Gelenkwellen (49) gekoppelt ist unter Bildung einer Hinterachsdifferentialsperre.

3. Fahrzeug nach Anspruch 1 oder 2, **dadurch gekennzeichnet, dass** nach erfolgtem Synchronisiervorgang in beliebiger Schaltabfolge die Mittenkupplung (15) schließt und die Hinterachs-Trennkupplung (59) schließt, und dass insbesondere bei geschlossener Mittenkupplung (15) und geschlossener Hinterachs-Trennkupplung (59) die Hinterachs-Sperrkupplung (57) öffnet und/oder die Mitten-Sperrkupplung (55) öffnet.

4. Fahrzeug nach einem der vorhergehenden Ansprüche, **dadurch gekennzeichnet, dass** das Mittendifferential (13) an seinen Ausgangsseiten je eine nach fahrzeughinten zur Mittenkupplung (15) führende Zwischenwelle (17) und eine nach fahrzeugvorne zu einem Vorderachsdifferential (19) führende Ritzelwelle (21) aufweist, und dass insbesondere die Ritzelwelle (21) über das Vorderachsdifferential (19) sowie über Vorderachs-Gelenkwellen (33) mit Vorderrädern (35) der Vorderachse in trieblicher Verbindung sind, und dass insbesondere das Mittendifferential (13) über eine Mitten-Sperrkupplung (55), insbesondere eine lastschaltbare Lamellenkupplung, sperrbar ist, und dass insbesondere bei aktivierter Sperrfunktion ein Differentialkorb (11) des Mittendifferentials (13) mit der zu dem Vorderachsdifferential (19) führenden Antriebswelle (21) gekoppelt ist unter Bildung einer Mitten-Differentialsperre.

5. Fahrzeug nach Anspruch 4, **dadurch gekennzeichnet, dass** die Mitten-Sperrkupplung (55) in Doppelfunktion nicht nur als Differentialsperre wirkt, sondern im geschlossenen Zustand, das heißt im Frontantrieb, eine Antriebsmoment-Übertragung vom Mittendifferential (13) zum Vorderachsdifferential (19) gewährleistet.

6. Fahrzeug nach einem der vorhergehenden Ansprüche, **dadurch gekennzeichnet, dass** die Elektromaschine (1) mittelbar oder unmittelbar auf ein, auf dem Differentialkorb (11) des Mittendifferentials (13) ausgebildetes Zahnrad (9) abtreibt, insbesondere unter Zwischenschaltung eines Schaltgetriebes (3) und/oder einer Vorgelegestufe (5) zur Drehmomentwandlung, etwa eine Stirnradstufe.

7. Fahrzeug nach Anspruch 4, 5 oder 6, **dadurch gekennzeichnet, dass** das Vorderachsdifferential (19) über eine Vorderachs-Sperrkupplung (53), insbesondere eine nicht lastschaltbare Klauenkupplung, sperrbar ist, und dass bei aktivierter Sperrfunktion ein Differentialkorb (27) des Vorderachsdifferentials (19) mit einer Vorderachs-Gelenkwelle (33) gekoppelt ist unter Bildung einer Vorderachs-Differentialsperre.

8. Fahrzeug nach einem der vorhergehenden Ansprüche, **dadurch gekennzeichnet, dass** der Frontantrieb in einem energiesparenden Effizienzmodus des Fahrzeugs aktiviert ist, und/oder dass der Allradbetrieb in einen Onroad-Betrieb und in einen Offroad-Betrieb unterteilbar ist.

9. Fahrzeug nach Anspruch 8, **dadurch gekennzeichnet, dass** im On-road-Betrieb die als Lamellenkupplung ausgebildete Hinterachs-Sperrkupplung (57) und/oder die als Lamellenkupplung ausgebildete Mitten-Sperrkupplung (55) zur Fahrdynamik-Einstellung schlupfgeregelt öffen- und schließbar sind, während die Mittenkupplung (15) und die Hinterachs-Trennkupplung (59) dauerhaft geschlossen sind und die Vorderachs-Sperrkupplung (53) geöffnet ist, und/oder dass insbesondere der Offroad-Betrieb identisch wie der Onroad-Betrieb gestaltet ist, mit Ausnahme, dass die Vorderachs-Sperrkupplung (53) geschlossen ist.

## Claims

1. All-wheel drive vehicle, the drivetrain of which has precisely one electric machine (1) which, in a front-wheel drive, only drives the front axle of the vehicle, wherein the electric machine (1) is couplable via a centre differential (13) and a centre clutch (15) to a cardan shaft (39), which is connectable in terms of drive to rear wheels (51) of the vehicle via a rear axle differential (47) and via propeller shafts (49), and wherein the rear axle is decoupled from the drivetrain when the centre clutch (15) is open and the rear axle is connected to the drivetrain when the centre clutch (15) is closed, wherein a rear axle separating clutch (59) is installed in one of the propeller shafts (49) of the rear axle, wherein, in the front-wheel drive, that is, with the centre clutch (15) open, the rear axle separating clutch (59) is opened, as a result of which a train section between the centre clutch (15) and the rear axle differential (47) is immobilized, wherein a change from the front-wheel drive to the all-wheel drive during the driving mode can be carried out without interruption of tractive force, and wherein, for the change from the front-wheel drive to the all-wheel drive, the centre clutch (15) can be closed, **characterized in that** the rear axle differential (47) is lockable via a rear axle locking clutch (57) as a powershiftable multi-plate clutch, and **in that** the rear axle locking clutch (57) acts in dual function as a synchronizing clutch, by means of which, before the centre clutch (15) is closed, a synchronizing operation takes place in which the cardan shaft (39) is accelerated to a rotational speed correlating with the vehicle speed such that the coupling half of the centre clutch (15) connected to the cardan shaft (39) can be synchronized with the rotational speed of the coupling half of the centre clutch (15) connected to the centre differential (13).

2. Vehicle according to Claim 1, **characterized in that**, when the locking function is activated, a differential cage (45) of the rear axle differential (47) is coupled to one of the rear axle propeller shafts (49) to form a rear axle differential lock.

3. Vehicle according to Claim 1 or 2, **characterized in that**, after the synchronizing operation has been carried out, in an arbitrary shift sequence the centre clutch (15) closes and the rear axle separating clutch (59) closes, and **in that**, in particular when the centre clutch (15) is closed and the rear axle separating clutch (59) is closed, the rear axle locking clutch (57) opens and/or the centre locking clutch (55) opens.

4. Vehicle according to any one of the preceding claims, **characterized in that** the centre differential (13) on its output sides has an intermediate shaft (17) leading to the rear of the vehicle to the centre clutch (15) and a pinion shaft (21) leading to the front of the vehicle to a front axle differential (19), and **in that**, in particular, the pinion shaft (21) is connected in terms of drive via the front axle differential (19) and via front axle propeller shafts (33) to front wheels (35) of the front axle, and **in that**, in particular, the centre differential (13) is lockable via a centre locking clutch (55), in particular a powershiftable multi-plate clutch, and **in that**, in particular when the locking function is activated, a differential cage (11) of the centre differential (13) is coupled to the drive shaft (21) leading to the front axle differential (19) to form a centre differential lock.

5. Vehicle according to Claim 4, **characterized in that** the centre locking clutch (55) acts in dual function not only as a differential lock, but, in the closed state, that is, in the front-wheel drive, ensures transmission of driving torque from the centre differential (13) to the front axle differential (19).

6. Vehicle according to any one of the preceding claims, **characterized in that** the electric machine (1) indirectly or directly drives a gearwheel (9) formed on the differential cage (11) of the centre differential (13), in particular by interconnecting a manual transmission (3) and/or a countershaft stage (5) for torque conversion, such as a spur gear stage.

7. Vehicle according to Claim 4, 5 or 6, **characterized in that** the front axle differential (19) is lockable via a front axle locking clutch (53), in particular a non-powershiftable dog clutch, and **in that**, when the locking function is activated, a differential cage (27) of the front axle differential (19) is coupled to a front axle propeller shaft (33) to form a front axle differential lock.

8. Vehicle according to any one of the preceding claims, **characterized in that** the front-wheel drive is activated in an energy-saving efficiency mode of the vehicle, and/or **in that** the all-wheel mode can be divided into an on-road mode and into an off-road mode.

9. Vehicle according to Claim 8, **characterized in that**, in the on-road mode, the rear axle locking clutch (57), which is in the form of a multi-plate clutch, and/or the centre locking clutch (55), which is in the form of a multi-plate clutch, are openable and closable in a slip-controlled manner for adjustment of the driving dynamics, while the centre clutch (15) and the rear axle separating clutch (59) are continuously closed and the front axle locking clutch (53) is open, and/or **in that**, in particular, the off-road mode is identical to the on-road mode, except that the front axle locking clutch (53) is closed.

## Revendications

1. Véhicule à traction intégrale, dont la chaîne cinématique comporte exactement une machine électrique (1) qui, en traction, entraîne uniquement l'essieu avant du véhicule, la machine électrique (1) pouvant être accouplée par un différentiel central (13) et un embrayage central (15) à un arbre à cardan (39), qui peut être relié en entraînement à des roues arrière (51) du véhicule par un différentiel d'essieu arrière (47) et par des arbres articulés (49), et l'essieu arrière étant découplé de la chaîne cinématique lorsque l'embrayage central (15) est ouvert et l'essieu arrière étant relié à la chaîne cinématique lorsque l'embrayage central (15) est fermé, un embrayage de séparation (59) d'essieu arrière étant monté dans un des arbres articulés (49) de l'essieu arrière, l'embrayage de séparation (59) d'essieu arrière étant ouvert en traction, c'est-à-dire lorsque l'embrayage central (15) est ouvert, ce qui provoque l'arrêt d'un train partiel entre l'embrayage central (15) et le différentiel d'essieu arrière (47), un passage de la traction à la traction intégrale pouvant être effectué sans interruption de la force de traction pendant le fonctionnement et l'embrayage central (15) pouvant être fermé pour le passage de la traction à la traction intégrale, **caractérisé en ce que** le différentiel d'essieu arrière (47) peut être bloqué en tant qu'un embrayage multidisque à changement de charge par un embrayage de blocage d'essieu arrière (57), et que l'embrayage de blocage d'essieu arrière (57) agit dans une double fonction comme un embrayage de synchronisation, au moyen duquel se produit avant la fermeture de l'embrayage central (15), un processus de synchronisation dans lequel l'arbre à cardan (39) est accéléré jusqu'à une vitesse de rotation en corrélation avec la vitesse du véhicule, de telle sorte que la moitié d'embrayage de l'embrayage central (15) reliée à l'arbre à cardan (39) peut être synchronisée avec la vitesse de rotation de la moitié d'embrayage de l'embrayage central (15) reliée au différentiel central (13).

2. Véhicule selon la revendication 1, **caractérisé en ce que**, lorsque la fonction de blocage est activée, une cage (45) de différentiel du différentiel d'essieu arrière (47) est accouplée à un des arbres articulés (49) d'essieu arrière en formant un blocage de différentiel d'essieu arrière.

3. Véhicule selon la revendication 1 ou 2, **caractérisé en ce que** l'embrayage central (15) et l'embrayage de séparation (59) d'essieu arrière se ferment après la réalisation du processus de synchronisation, et que l'embrayage de blocage (57) d'essieu arrière et l'embrayage de blocage central (55) s'ouvrent en particulier lorsque l'embrayage central (15) est fermé et que l'embrayage de séparation (59) d'essieu arrière est fermé.

4. Véhicule selon l'une des revendications précédentes, **caractérisé en ce que** le différentiel central (13) comporte sur ses côtés de sortie respectivement un arbre intermédiaire (17) menant vers l'arrière du véhicule vers l'embrayage central (15) et un arbre de pignon (21) menant vers l'avant du véhicule vers un différentiel d'essieu avant (19), et qu'en particulier l'arbre de pignon (21) est en liaison motrice avec des roues avant (35) de l'essieu avant par le différentiel d'essieu avant (19) et par des arbres articulés d'essieu avant (33), et qu'en particulier le différentiel central (13) peut être bloqué par un embrayage de blocage central (55), en particulier un embrayage multidisque à changement de charge, et qu'une cage (11) de différentiel du différentiel central (13) est couplée à l'arbre d'entraînement (21) menant au différentiel d'essieu avant (19) en formant un blocage de différentiel central en particulier lorsque la fonction de blocage est activée.

5. Véhicule selon la revendication 4, **caractérisé en ce que** l'embrayage de blocage central (55) agit dans une double fonction non seulement comme blocage de différentiel, mais assure également, à l'état fermé, c'est-à-dire en traction, une transmission de couple d'entraînement du différentiel central (13) au différentiel d'essieu avant (19).

6. Véhicule selon l'une des revendications précédentes, **caractérisé en ce que** la machine électrique (1) entraîne directement ou indirectement une roue dentée (9) formée sur la cage (11) de différentiel du différentiel central (13), en particulier en intercalant une boîte de vitesses (3) et/ou un étage de transmission intermédiaire (5) pour la conversion de couple de rotation, par exemple un étage d'engrenage droit.

7. Véhicule selon la revendication 4, 5 ou 6, **caractérisé en ce que** le différentiel d'essieu avant (19) peut être bloqué par un embrayage de blocage d'essieu avant (53), en particulier un embrayage à griffes non commutable sous charge, et **en ce que** lors de l'activation de la fonction de blocage, une cage (27) de différentiel du différentiel d'essieu avant (19) est couplée à un arbre articulé d'essieu avant (33) pour former un blocage de différentiel d'essieu avant.

8. Véhicule selon l'une des revendications précédentes, **caractérisé en ce que** la traction est activée dans un mode de rendement énergétique du véhicule et/ou que la traction intégrale peut être divisée en un fonctionnement sur route et en un fonctionnement tout-terrain.

9. Véhicule selon la revendication 8, **caractérisé en ce que** l'embrayage de blocage d'essieu arrière (57) formé comme un embrayage multidisque et/ou l'embrayage de blocage central (55) formé comme un embrayage multidisque peuvent être ouverts et fermés avec une régulation antipati-nage pour le réglage de la dynamique de conduite dans le mode de fonctionnement sur route, tandis que l'embrayage central (15) et l'embrayage de séparation d'essieu arrière (59) sont fermés de manière permanente et l'embrayage de blocage d'essieu avant (53) est ouvert, et/ou qu'en particulier le mode de fonctionnement tout-terrain est conçu de manière identique au mode de fonctionnement sur route, à l'exception du fait que l'embrayage de blocage d'essieu avant (53) est fermé.
